# EUROPÄISCHE PATENTANMELDUNG

(11) **EP 0 978 675 A2**
(43) Veröffentlichungstag der Anmeldung: **09.02.2000**
(21) Anmeldenummer: 99113476.8
(22) Anmeldetag: 13.07.1999
(51) Int. Cl.: F16L 5/02, F16L 5/14

(54) **Mauerdurchführung**

(30) Priorität: 05.08.1998 DE 19835362
(71) Anmelder: Hermann-Heinz Burger Gas- und Wasserarmaturen GmbH, 58239 Schwerte (DE)
(72) Erfinder: Burger, Hermann-Heinz, 8849 Alpthal (CH)
(74) Vertreter: Dörner, Lothar, Dipl.-Ing.

(57) **Zusammenfassung**

Eine Mauerdurchführung für mehrere Versorgungsleitungen weist eine im Hausinneren angeordnete Wandscheibe (1) auf. In der Wandscheibe (1) sind Löcher (11) für die in das Haus einzuführenden Leitungen vorgesehen. In mindestens ein Loch (11) der Wandscheibe (1) ist ein Schutzrohr (2) aus Metall eingeschweißt. Auf der Außenseite des Hauses ist eine zweite Wandscheibe (5) mit Löchern (51) für die in das Haus einzuführenden Leitungen angeordnet.

## Beschreibung

Die Erfindung betrifft eine Mauerdurchführung für mehrere Versorgungsleitungen mit einer im Hausinneren angeordneten Wandscheibe, die Löcher für die in das Haus einzuführenden Leitungen aufweist.

Mauerdurchführungen für Versorgungsleitungen dienen zum Einführen der Leitungen aus dem Erdreich in das Innere des Hauses. An diese Durchführungen werden unterschiedliche Anforderungen gestellt. So müssen alle Durchführungen gewährleisten, daß kein Wasser aus dem Erdreich in das Innere des Hauses eindringt. Darüber hinaus ist bei Durchführungen für Gasleitungen gefordert, daß sie auch bei Feuereinwirkung noch soweit dicht bleiben, daß die nach den DVGW-Richtlinien zugelassenen Leckgasmengen nicht überschritten werden. Für in das Haus eingeführte Strom- und Telekommunikationsleitungen gelten die VDE-Richtlinien.

Um das mehrfache Durchbohren einer Hauswand für die Vielzahl von Versorgungsleitungen zu vermeiden, ist es bekannt, Mauerdurchführungen für mehrere Versorgungsleitungen einzusetzen. Diese sogenannten Mehrfach-Hauseinführungen weisen im Hausinneren eine Wandscheibe auf, die eine Anzahl Löcher für den Durchtritt der Versorgungsleitungen aufweist. Die Anzahl der Löcher entspricht der Anzahl der in das Haus einzuführenden Versorgungsleitungen wie beispielsweise Gas, Wasser, Strom, Telekommunikation oder ähnlichem. Bei den bekannten Mehrfach-Hauseinführungen befindet sich an der Wandscheibe ein in die Bohrung der Hauswand eingeführter Preßring. Der Preßring weist eine gleiche Anzahl an Bohrungen auf, wie die Wandscheibe Löcher für die Versorgungsleitungen aufweist. Darüber hinaus ist in der Bohrung der Hauswand ein weiterer Preßring auf der dem Erdreich zugewandten Seite angeordnet, der ebenfalls Bohrungen für den Durchtritt der Versorgungsleitungen aufweist. Bei diesen Mehrfach-Hauseinführungen sind alle Versorgungsleitungen, also auch die wasser- und gasführenden Leitungen aus kunststoffummantelten Rohren ausgeführt. Die bekannten Mehrfach-Hauseinführungen weisen den Nachteil auf, daß die Wandscheibe mit den Versorgungsleitungen nicht kraftschlüssig verbunden werden kann, so daß sie einer Zugbelastung, die beispielsweise bei Bauarbeiten durch einen Bagger auf die Leitungen ausgeübt werden kann, nicht standhalten. Dadurch können die im Hausinneren vorgesehenen Leitungsanordnungen beschädigt werden, was insbesondere bei Wasser- und Gasleitungen zu Undichtigkeiten führen kann, die einen Wasser- bzw. Gasaustritt zur Folge haben können.

Hier will die Erfindung Abhilfe schaffen. Der Erfindung liegt die Aufgabe zugrunde, eine Mauerdurchführung für mehrere Versorgungsleitungen zu schaffen, bei der die Wandscheibe kraftschlüssig mit den Versorgungsleitungen verbunden ist und somit auch hoher Zugbelastung standhalten kann. Gemäß der Erfindung wird diese Aufgabe dadurch gelöst, daß in mindestens ein Loch der Wandscheibe ein Schutzrohr aus Metall eingeschweißt ist, und daß auf der Außenseite des Hauses eine zweite Wandscheibe mit Löchern für die in das Haus einzuführenden Leitungen angeordnet ist.

Mit der Erfindung ist eine Mauerdurchführung für mehrere Versorgungsleitungen geschaffen, bei der eine kraftschlüssige Verbindung zwischen Versorgungsleitung und Wandscheibe hergestellt ist. Dadurch ist gewährleistet, daß die erfindungsgemäße Mauerdurchführung auch hohen auf die Versorgungsleitungen ausgeübten Zugbelastungen standhält und somit im Hausinneren keine Beschädigungen der Leitungsanordnungen entstehen. Durch die eingesetzte zweite Wandscheibe mit Löchern findet darüber hinaus eine Abdichtung der Kernbohrung durch die Hauswand statt und gleichzeitig ist eine Führung der Versorgungsleitungen in der Kernbohrung geschaffen. Die zweite Wandscheibe ist dabei auf einfache Weise an der Außenseite des Hauses auf die Kernbohrung aufgesetzt, wobei die Versorgungsleitungen die Wandscheibe mit Hilfe der Löcher durchsetzen. Dadurch ist zudem die Montagezeit der Mauerdurchführung erheblich verkürzt.

In Ausgestaltung der Erfindung ist auf mindestens ein Schutzrohr auf der der Wand abgewandten Seite der Wandscheibe ein Klemmring aufgesetzt. Mit Hilfe des Klemmrings ist die Wandscheibe einfach und sicher an den Versorgungsleitungen zu befestigen.

In Weiterbildung der Erfindung weist die Wandscheibe eine Verfüllbohrung auf. Dadurch ist es möglich, Verfüllmaterial nach Befestigen der Wandscheibe in die Kernbohrung einzubringen. Die Mauerdurchführung kann demzufolge zunächst einwandfrei justiert und befestigt werden, bevor das Verfüllen der Kernbohrung von außen beginnt.

Vorteilhaft ist die Wandscheibe mit Griffen versehen. Hierdurch ist die Handhabung der von außen auf die Kernbohrung aufzusetzenden Wandscheibe erheblich vereinfacht.

In vorteilhafter Ausgestaltung ist zwischen Wandscheibe und Mauer jeweils eine Dichtung vorgesehen. Mit Hilfe der Dichtungen ist die Funktionssicherheit der erfindungsgemäßen Mauerdurchführung zusätzlich erhöht. Vorteilhaft besteht die Dichtung aus einer Schaumstoffunterlage. Dadurch sind die Kosten bei einwandfreier Funktionssicherheit gering gehalten.

Weiterbildungen und Ausgestaltungen der Erfindung sind den übrigen Unteransprüchen angegeben. Ein Ausführungsbeispiel der Erfindung ist in der Zeichnung dargestellt und ist nachfolgend im einzelnen beschrieben. Es zeigen:

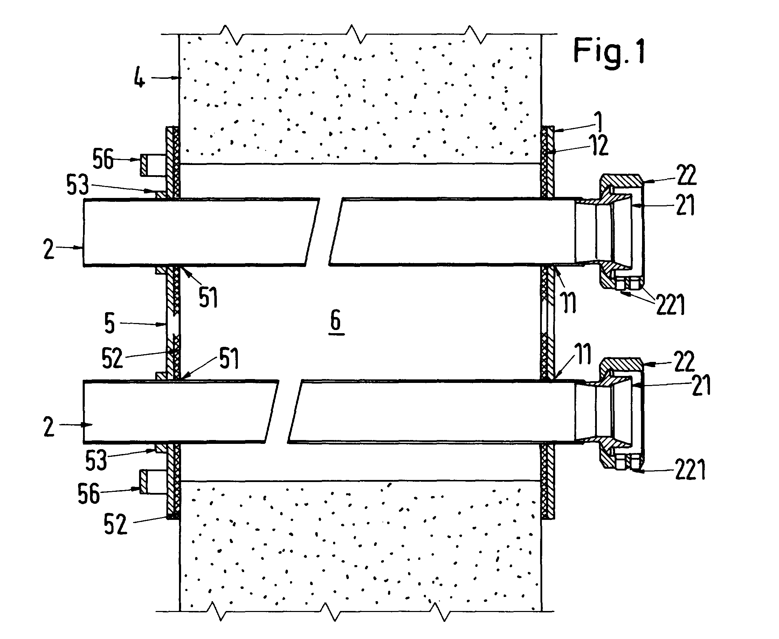

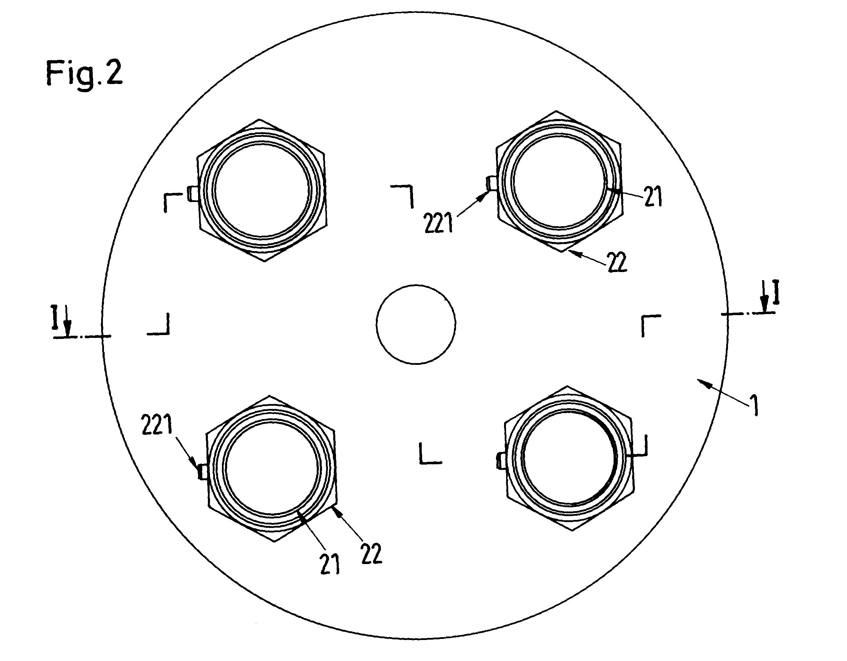

- Fig. 1:: einen Schnitt durch eine Hauswand mit einer Mauerdurchführung entlang der Linie I-I in Fig. 2;
- Fig. 2:: die Draufsicht auf eine Wandscheibe im Hausinneren und

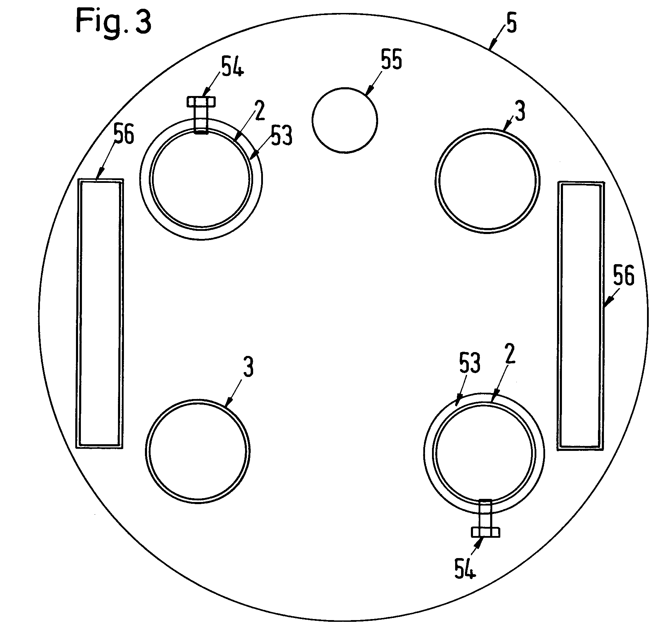

- Fig. 3:: die Draufsicht auf eine Wandscheibe außerhalb des Hauses.

Die im Ausführungsbeispiel dargestellte Mauerdurchführung für mehrere Versorgungsleitungen besteht aus einer Wandscheibe 1, die von Schutzrohren 2 und 3 durchsetzt ist. Die Wandscheibe 1 liegt im Hausinneren an einer Hauswand 4 im Bereich einer Kernbohrung 6 an. Die Rohre 2 und 3 treten durch die Kernbohrung 6 hindurch und durchsetzen eine auf der Außenseite der Hauswand 4 angeordnete zweite Wandscheibe 5.

Die Wandscheibe 1 ist kreisförmig ausgebildet und aus VA-Stahl hergestellt. Sie weist vier Löcher 11 auf, durch welche die Rohre 2 die Scheibe 1 durchsetzen. Die Anzahl der Löcher in der Scheibe 1 richtet sich nach der Anzahl der durch die Mauer hindurchführenden Versorgungsleitungen. Es ist jedoch auch möglich, ein Loch mit einem Stopfen zu verschließen, wenn es nicht benötigt wird. Zwischen Wandscheibe 1 und Hauswand 4 ist eine Dichtung 12 geklemmt gehalten. Die Dichtung 12 ist im Ausführungsbeispiel von ihren Abmessungen her deckungsgleich mit der Wandscheibe 1 und weist ebenfalls vier Löcher auf. Die Dichtung 12 besteht aus einer Schaumstoffunterlage.

Die Schutzrohre 2 sind aus VA-Stahl hergestellt. Der Außendurchmesser der Rohre 2 ist gleich der lichten Weite der Löcher 11 in der Wandscheibe 1. Die Rohre 2 sind mit der Wandscheibe 1 verschweißt und folglich kraftschlüssig mit ihr verbunden. An dem in das Innere des Hauses hineinragende Ende der Rohre 2 ist ein Adapter 21 angeschweißt. Auf dem Adapter 21 ist eine Überwurfmutter 22 angeordnet. In jeder Überwurfmutter 22 sind jeweils zwei Stellschrauben 221 vorgesehen. Mit Hilfe des Adapters 21 und der Überwurfmutter 22 erfolgt die Anbindung der Mauerdurchführung an das Versorgungsleitungssystem im Inneren des Hauses. Dabei dienen die Stellschrauben 221 zur Arretierung, um ein Verdrehen der angeschlossenen Leitungen zu verhindern.

Durch die Schutzrohre 2 sind die - nicht dargestellten - gas- bzw. wasserführenden Leitungen hindurchgelegt. Diese sind aus PE-Rohren gebildet. Die zugfeste Verbindung zwischen PE-Rohr und Schutzrohr 2 bzw. dem Leitungssystem im Inneren des Hauses erfolgt beispielsweise über einen Verschraubungskörper, der mit der Überwurfmutter 22 verschraubt ist. Zwischen Adapter 21/Verschraubungskörper und einer Stützhülse ist unter Zuhilfenahme eines Profildichtrings das PE-Rohr zugfest gehalten (vgl. DE-GM 92 03 042). Es sind auch andere Ausführungen möglich.

Die Schutzrohre 3 sind aus PVC hergestellt. Ihr Außendurchmesser ist ebenfalls gleich der lichten Weite der Löcher 11. Die Rohre 3 sind mit der Wandscheibe 1 verklebt. Durch die Rohre 3 sind die Leitungen für Strom, Telekommunikation oder ähnlichem hindurchgeführt. Die Leitungen sind in den Rohren 3 auf ihrer dem Hausinneren zugewandten Seite - ausgangsseitig - mit Hilfe einer Quetschdichtung und auf ihrer dem Hausinneren abgewandten Seite - eingangsseitig - durch einen O-Ring gehalten. Über die genannten Teile erfolgt zugleich die Abdichtung zwischen den Leitungen und den Rohren 3. Die Verbindung im Hausinneren erfolgt im Ausführungsbeispiel auf die gleiche Weise wie bei den Rohren 2.

Die Wandscheibe 5 ist ebenfalls kreisförmig ausgebildet. Sie weist vier Löcher 51 auf, durch die die Rohre 2 die Wandscheibe 5 durchsetzen. Zwischen Wandscheibe 5 und Hauswand 4 ist eine Dichtung 52 angeordnet. Die Dichtung 52 ist in ihrer Form deckungsgleich mit der Wandscheibe 5. Sie besteht wie die Dichtung 12 aus einer Schaumstoffunterlage. Auf der der Wand 4 abgewandten Seite der Wandscheibe 5 ist um die zwei sich diagonal gegenüberliegenden Rohre 2 jeweils ein Klemmring 53 aufgesetzt. Die Klemmringe 53 sind mit der Wandscheibe 5 verschweißt und jeweils mit einer Spannschraube 54 versehen durch die die Wandscheibe 5 auf dem Rohr 2 gehalten ist. Mit Hilfe der Klemmringe und Spannschrauben erfolgt eine sichere Befestigung der Wandscheibe 5, da diese zwischen einerseits der Hauswand 4 und andererseits den Klemmringen 53, die auf den Stahlrohren 2 verspannt sind, eingeklemmt ist.

Die Wandscheibe 5 weist eine Verfüllbohrung 55 auf. Die Verfüllbohrung 55 dient zum Einfüllen von Verfüllmaterial, mit dem nach dem Einbau der Mauerdurchführung der zwischen den Wandscheiben 1 und 5 gebildete Hohlraum mit Verfüllmaterial ausgefüllt ist. Als Verfüllmaterial findet vorzugsweise Montageschaum oder Quellbeton Anwendung. Auf der Wandscheibe 5 sind im Ausführungsbeispiel zwei Griffe 56 angeordnet, mit denen die Wandscheibe 5 gut handhabbar ist.

Mit Hilfe der Mauerdurchführung ist nur noch eine Kernbohrung bzw. ein Futterrohr in der Hauswand notwendig. Die Versorgungsleitungen sind durch einen Hausanschlußgraben die Hauswand herangeführt. Beim Einbau ist zunächst die Wandscheibe 1 mit den eingeschweißten Rohren 2 vom Inneren des Hauses auf die Kernbohrung 6 in der Hauswand 4 aufgesetzt. Die Rohre 2 werden durch die Bohrung 6 hindurchgeführt. Adapter 21 und Überwurfmutter 22 sind dabei bereits an den Rohren 2 angebracht. Im Anschluß daran wird von außen die Wandscheibe 5 über die Rohre 2 gegen die Wand 4 geschoben und nach Anlage an der Hauswand 4 mit den Klemmringen 53 und den Spannschrauben 54 verpreßt. Als letzter Arbeitsgang wird durch die Verfüllbohrung 55 das Verfüllmaterial in die Kernbohrung 6 eingefüllt, wodurch die Mauerdurchführung gas- und wasserdicht vergossen ist.

## Patentansprüche

1. Mauerdurchführung für mehrere Versorgungsleitungen mit einer im Hausinneren angeordneten Wandscheibe, die Löcher für die in das Haus einzuführenden Leitungen aufweist, dadurch gekennzeichnet, daß in mindestens ein Loch (11) der Wandscheibe (1) ein Schutzrohr (2) aus Metall eingeschweißt ist, und daß auf der Außenseite des Hauses eine zweite Wandscheibe (5) mit Löchern (51) für die in das Haus einzuführenden Leitungen angeordnet ist.

2. Mauerdurchführung nach Anspruch 1, dadurch gekennzeichnet, daß auf mindestens ein Schutzrohr (2) auf der der Wand (4) abgewandten Seite der Wandscheibe (5) ein Klemmring (53) aufgesetzt ist.

3. Mauerdurchführung nach Anspruch 1 oder 2, dadurch gekennzeichnet, daß die Wandscheibe (5) eine Verfüllbohrung (55) aufweist.

4. Mauerdurchführung nach einem der Ansprüche 1 bis 3, dadurch gekennzeichnet, daß die Wandscheibe (5) mit Griffen (56) versehen ist.

5. Mauerdurchführung nach einem der Ansprüche 1 bis 4, dadurch gekennzeichnet, daß die Wandscheiben (1, 5) aus VA-Stahl hergestellt sind.

6. Mauerdurchführung nach einem der Ansprüche 1 bis 5, dadurch gekennzeichnet, daß zwischen den Wandscheiben (1, 5) und der Hauswand (4) jeweils eine Dichtung (12, 52) vorgesehen ist.

7. Mauerdurchführung nach Anspruch 6, dadurch gekennzeichnet, daß die Dichtung (12, 52) aus einer Schaumstoffunterlage besteht.

8. Mauerdurchführung nach einem der Ansprüche 1 bis 7, dadurch gekennzeichnet, daß das Schutzrohr (2) aus VA-Stahl hergestellt ist.

9. Mauerdurchführung nach einem der Ansprüche 1 bis 8, dadurch gekennzeichnet, daß das Schutzrohr (3) aus PVC hergestellt ist.

10. Mauerdurchführung nach Anspruch 9, dadurch gekennzeichnet, daß das Schutzrohr (3) mit der Wandscheibe (1) verklebt ist.

11. Mauerdurchführung nach einem der Ansprüche 1 bis 10, dadurch gekennzeichnet, daß das Verfüllmaterial Montageschaum oder Quellbeton ist.
